# EUROPEAN PATENT APPLICATION

(11) **EP 4 439 774 A1**
(43) Date of publication of application: **02.10.2024**
(21) Application number: 23213167.2
(22) Date of filing: 29.11.2023
(51) Int. Cl.: H01M 10/42, H01M 10/48, H01M 50/204, H01M 50/507, H01M 50/519, H01M 50/569

(54) **CCS ASSEMBLY, BATTERY MODULE AND BATTERY PACK**

(30) Priority: 31.03.2023 CN 202320704342 U
(71) Applicant: Eve Energy Co. Ltd., Huizhou, Guangdong 516000 (CN)
(72) Inventor: LI, Caiyu, Guangdong, 516000 (CN)
(74) Representative: GLP S.R.L.

(57) **Abstract**

Disclosed in the present application is a CCS assembly, including a flexible circuit board, the flexible circuit board being provided with a collecting terminal, the collecting terminal being used for collecting a temperature signal of a cell; and a plastic supporting frame, the plastic supporting frame being provided with a temperature-sensing collecting zone, an edge of the temperature-sensing collecting zone being provided with an adhesive blocking part, in which the flexible circuit board is mounted and fixed on the plastic supporting frame, and the collecting terminal is provided in an interior of the adhesive blocking part, a separation distance being formed between the collecting terminal and a side wall of the adhesive blocking part.

## Description

The present application claims priority of Chinese Patent Application No.202320704342.6 filed on March 31, 2023 before CNIPA. All the above are hereby incorporated by reference in their entirety.

### Field

The present application relates to the field of batteries, in particular to a CCS assembly, a battery module and a battery pack.

### Background

Flexible circuit board (FPC) is a printed circuit based on polyester film or polyimide with high reliability and excellent flexibility. By embedding the designed circuits on a thin, lightweight plastic sheet that is bendable, a large amount of precision elements is stacked in a narrow and limited space, forming a bendable and flexible circuit. Flexible circuit boards may be freely bent and folded, light weight, small size, good heat dissipation, and easy to install, breaking through the traditional interconnection technology, and are widely used in the CCS assembly of battery packs.

Typically, a heat-conductive adhesive is used to reinforce and conduct heat between the collecting terminals of the flexible circuit board and the cell. However, due to a variety of factors in the manufacturing process, it is inevitable that there may be an overflow of heat-conductive adhesive during coating.

### Summary

In order to overcome at least one of the defects of the prior art mentioned above, provided in the present application is a CCS assembly, a battery module and a battery pack, solving the problem that the heat-conductive adhesive between the collecting terminal of the existing flexible circuit board and the cell is prone to overflow during the coating process.

As a first aspect, provided in an embodiment of the present application is a CCS assembly, including:
a flexible circuit board, the flexible circuit board being provided with a collecting terminal, the collecting terminal being used for collecting a temperature signal of a cell; and
a plastic supporting frame, the plastic supporting frame being provided with a temperature-sensing collecting zone, an edge of the temperature-sensing collecting zone being provided with an adhesive blocking part, in which the flexible circuit board is mounted and fixed on the plastic supporting frame, and the collecting terminal is provided in an interior of the adhesive blocking part, a separation distance being formed between the collecting terminal and a side wall of the adhesive blocking part.

In one implementation, the adhesive blocking part includes a first lateral frame and a second lateral frame; the first lateral frame and the second lateral frame are vertically distributed in an L shape; and the first lateral frame and the second lateral frame are both fixedly connected to the plastic supporting frame.

In one implementation, the adhesive blocking part includes two first lateral frames and two second lateral frames; two first lateral frames are provided oppositely and two second lateral frames are provided oppositely; and two first lateral frames and two second lateral frames are enclosed in a square structure.

In one implementation, an interior of the temperature-sensing collecting zone is also provided with a first positioning line; the first positioning line is extended in a length direction of the flexible circuit board; and the collecting terminal is assembled in the interior of the temperature-sensing collecting zone and is aligned with the first positioning line, so that the separation distance is formed between the collecting terminal and the adhesive blocking part.

In one implementation, the interior of the temperature-sensing collecting zone is also provided with a second positioning line; the second positioning line is perpendicular to the first positioning line; and the collecting terminal is assembled in the interior of the temperature-sensing collecting zone and is aligned with the second positioning line, so that the separation distance is formed between the collecting terminal and the adhesive blocking part.

In one implementation, a plurality of the temperature-sensing collecting zones are provided on the plastic supporting frame in a length direction of the flexible circuit board; an edge of each temperature-sensing collecting zone is provided with the adhesive blocking part; a plurality of the collecting terminals are provided on the flexible circuit board; each collecting terminal is provided corresponding to each adhesive blocking part; and each collecting terminal is provided in an interior of each adhesive blocking part.

In one implementation, the collecting terminal includes a temperature sensing member and a collection supporting part, the temperature sensing member being fixedly connected to the collection supporting part, the collection supporting part being fixedly connected to the flexible circuit board.

In one implementation, thermally conductive adhesive is poured on the collecting terminal, used for thermally conductively connecting the collecting terminal to the cell.

As a second aspect, disclosed in an embodiment of the present application is a battery module, including
a battery pack; and
a CCS assembly mentioned above, the CCS assembly being provided on the battery pack, and a collecting terminal of a flexible circuit board being thermally conductively connected to the battery pack.

In one implementation, a plurality of the collecting terminals are provided on the flexible circuit board, and a plurality of the collecting terminals are thermally conductively connected to a plurality of cells of the battery pack.

In one implementation, a height of the collecting terminal is greater than that of the adhesive blocking part, so that the collecting terminal abuts the cell of the battery pack.

As a third aspect, disclosed in an embodiment of the present application is also a battery pack, including the battery module mentioned above.

In summary, a CCS assembly, a battery module and a battery pack provided in the present application provide technical effects as follows:

The structure of the adhesive blocking part is used to allow the excess adhesive (i.e., heat-conductive adhesive of the prior art) to be restrained and stored in an interior of the adhesive blocking part when an excessive amount of adhesive is injected into the collecting terminal provided within the temperature-sensing collecting zone. More ingeniously, a separation distance between the adhesive blocking part and the collecting terminal is provided so that excess adhesive is diffused to be accommodated within the range of the separation distance, thereby ensuring that no or only a small amount of adhesive is in contact with the adhesive blocking part. Therefore, it is not only highly effective in solving the problem that the heat-conductive adhesive between the collecting terminal of the existing flexible circuit board and the cell is prone to overflowing during the coating process but also avoids the problem that the heat from the plastic supporting frame is transferred to the collecting terminal and leads to the problem of interfering with the detection of the collecting terminal, so as to achieve the technical effect of improving the collecting accuracy of the collecting terminal.

### Brief description of the drawings

Fig. 1 is an overall structural diagram of a CCS assembly in the first embodiment of the present application;
Fig. 2 is a partially enlarged diagram of Fig. 1 at A;
Fig. 3 is a top view of a CCS assembly in the first embodiment of the present application;
Fig. 4 is a partially enlarged diagram of Fig. 3 at B;
Fig. 5 is an exploded view of a CCS assembly in the first embodiment of the present application.

Labels: 11 flexible circuit board; 12 collecting terminal; 121 temperature sensing member; 122 collection supporting part; 21 plastic supporting frame; 22 adhesive blocking part; 221 first lateral frame; 222 second lateral frame; 3 separation distance; 41 first positioning line; 42 second positioning line.

### Detailed description of the preferred embodiments

In the description of the present application, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description and simplify operation, but not to indicate or imply that the referred device or element has a specific orientation, or is constructed and operated in a specific orientation. Therefore, they should not be construed as a limitation of the present application.

### First Embodiment

Flexible circuit board 11, also known as FPC, which provides good properties such as light weight, thin thickness, and good bendability, has been widely used in battery packs and battery products, enabling battery packs and battery products to provide more prominent advantages in terms of such as safety, light weight, and layout regularity. Typically, the flexible circuit board 11 is used in battery packs and battery products as a collecting harness for testing, collecting voltage and detecting temperature.

In the manufacturing process (such as pressing process) flow, due to the process parameters (such as temperature, humidity and time) in the manufacturing process is improperly configured or the coating of adhesive is uneven, it is easy to lead to the overflow of adhesive in the manufacturing process. In addition, factors such as excessive adhesive output and excessive pressure during processing may also lead to the abnormal problem of adhesive overflow.

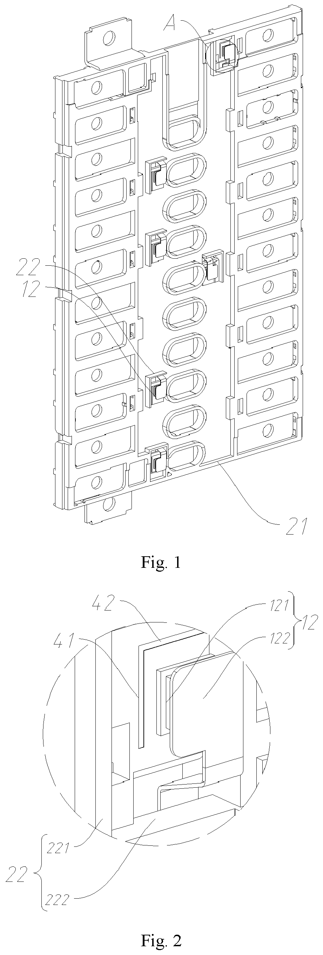

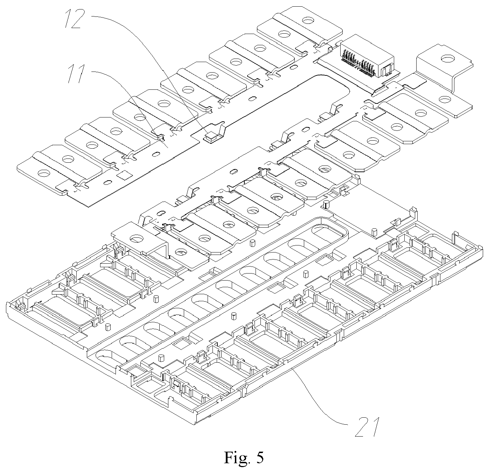

In view of the problem of adhesive overflow during the processing of flexible circuit board 11 mentioned above, please refer to Fig. 1 to Fig. 5 for details. Disclosed in the present application is a CCS assembly, including:
a flexible circuit board 11, the flexible circuit board 11 being provided with a collecting terminal 12, the collecting terminal 12 being used for collecting a temperature signal of a cell; and
a plastic supporting frame 21, the plastic supporting frame 21 being provided with a temperature-sensing collecting zone, an edge of the temperature-sensing collecting zone being provided with an adhesive blocking part 22, in which the flexible circuit board 11 is mounted and fixed on the plastic supporting frame 21, and the collecting terminal 12 is provided in an interior of the adhesive blocking part 22, the collecting terminal 12 being connected to the plastic supporting frame 21 by adhesive.

In the present embodiment, a plastic supporting frame 21 cooperating with the flexible circuit board 11 may better ensure the lightweight of the CCS assembly, and also enable the structure of the CCS assembly to be lighter, more cost-saving, and also improve the processing efficiency. When the CCS assembly is mounted and fixed on the battery pack, the temperature-sensing collecting zone is projected onto a surface of the corresponding cell to form temperature-sensing collecting points on the cell. Thermally conductive adhesive is poured on the collecting terminal 12 to achieve the objective of thermal conductive connection between the collecting terminal 12 and the cell.

On the one side, utilizing the good adhesive properties of the heat-conductive adhesive as well as the excellent moisture-proof and shock-resistant properties thereof, the collecting terminal 12 is stably fixed on the corresponding cell, so as to avoid the risk of loosening between the flexible circuit board 11 and the cell. On the flip side, utilizing the thermal conductivity of the heat-conductive adhesive, the temperature of the cell may be steadily transferred to the collecting terminal 12 through the heat-conductive adhesive, thereby enabling the collecting terminal 12 to continuously collect the temperature signal of the cell.

It is to be noted that the adhesive is not limited to the heat-conductive adhesive mentioned above. Other adhesives that may achieve the thermal conductive connection between the collecting terminal 12 and the cell are all may be used as adhesive for replacing the heat-conductive adhesive in the present embodiment.

Besides reducing the amount of adhesive of the heat-conductive adhesive, constrained by the adhesive blocking part 22 mentioned above, the adhesive is rendered not to diffuse and flow over a large area towards a periphery of the collecting terminal 12. When the amount of adhesive is excessive, the excess adhesive may be constrained in the interior of the adhesive blocking part 22, which solves the risk that the collecting terminal 12 of the flexible circuit board 11 is prone to overflow of adhesive during the process of applying adhesive.

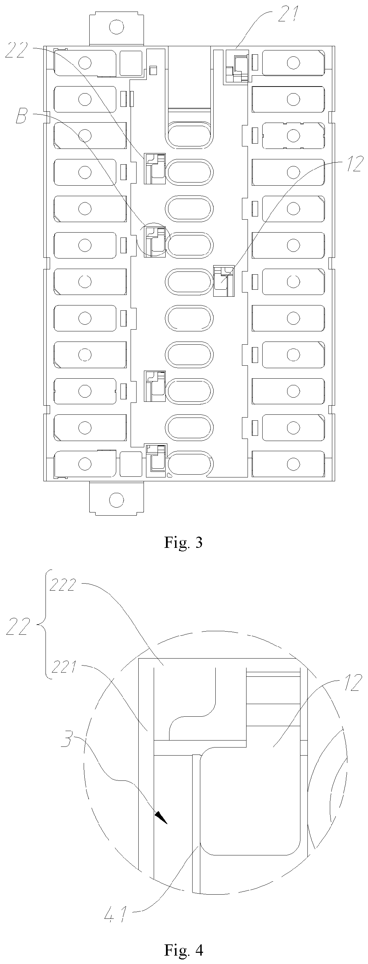

As the essence of the present embodiment is that, as shown in Fig. 3 and Fig. 4 for details, a separation distance 3 is provided between the collecting terminal 12 and a side wall of the adhesive blocking part 22, in which the separation distance 3 is used to accommodate the excess adhesive, which reduces heat transfer from the plastic supporting frame 21 directly or indirectly to the collecting terminal 12 through the adhesive.

Specifically, part of the heat of the cell is transferred to the plastic supporting frame 21, and then the plastic supporting frame 21 also possesses a certain amount of heat. When the amount of adhesive is excessive, the excess adhesive diffuses to the separation distance 3 so that a small amount of adhesive is in contact with the adhesive blocking part 22 or even no adhesive in contact with the adhesive blocking part 22, which avoids the problem of heat on the plastic supporting frame 21 aggregating to the collecting terminal 12 through the adhesive, thereby leading to interference with the accurate collection of the temperature of the cell by the collecting terminal 12. Further, under the cooperating action of the adhesive blocking part 22 and the separation distance 3, the problem of overflow of adhesive in the processing of the flexible circuit board 11 is solved, and the collecting accuracy of the collecting terminal 12 for the temperature of the cell is also effectively improved.

Unexpectedly, when the amount of adhesive is managed within a suitable range, the adhesive and the adhesive blocking part 22 are also capable of blocking the transfer of heat from the adhesive blocking part 22 to the collecting terminal 12 under the action of the separation distance 3. Therefore, in conjunction with the method of managing the amount of adhesive, it may highly effectively ensure that the collecting terminal 12 detects and collects the temperature of the cell with high accuracy.

As another solution of the present embodiment, please refer to Fig. 1, Fig. 2 and Fig. 3 for details. The adhesive blocking part 22 includes two first lateral frame 221 and two second lateral frame 222; two first lateral frame 221 are provided oppositely and two second lateral frame 222 are provided oppositely; and two first lateral frame 221 and two second lateral frame 222 are enclosed in a square structure.

It is to be noted that each first lateral frame 221 is connected to the adjacent second lateral frame 222, which may not only ensure that the adhesive may not infiltrate out from the adhesive blocking part 22 but may also effectively ensure an overall structural strength of the adhesive blocking part 22. Admittedly, each lateral edge of the first lateral frame 221 may also be in contact with a lateral edge of the second lateral frame 222. Alternatively, a gap exists between the first lateral frame 221 and the second lateral frame 222.

Supplementarily, the separation distance 3 may be suitably increased in order to achieve that, in the case of an excessive amount of adhesive, the excess adhesive is not in contact with the first lateral frame 221 or with the second lateral frame 222, in which the size of the separation distance 3 is determined and adjusted according to the structural design of the plastic supporting frame 21 and the assembly requirements of the battery, and the size of the separation distance 3 is not limited hereby.

As an preferable solution of the present embodiment, please refer to Fig. 1, Fig. 2 and Fig. 3 for details. The adhesive blocking part 22 includes a first lateral frame 221 and a second lateral frame 22, in which the first lateral frame 221 and the second lateral frame 222 are vertically distributed in an L shape, and the first lateral frame 221 and the second lateral frame 222 are both fixedly connected to the plastic supporting frame 21.

The first lateral frame 221 is preferably connected to the second lateral frame 222, which ensures that the adhesive may not infiltrate from the adhesive blocking part 22, and also ensures an overall structural strength of the adhesive blocking part 22. Admittedly, a lateral edge of the first lateral frame 221 may also be in contact with a lateral edge of the second lateral frame 222. Alternatively, a gap exists between the first lateral frame 221 and the second lateral frame 222.

In such a setup, it not only further reduces the material and mass of the adhesive blocking part 22 and saves cost, but also simplifies the structure of the plastic supporting frame 21, rendering the structure of the plastic supporting frame 21 more simple and lightweight. More importantly, the area of wall thickness is canceled. Also, in the case of reducing the temperature-sensing collecting zone and/or the separation distance 3, heat of the plastic supporting frame 21 may be avoided to directly or indirectly transfer to the collecting terminal 12 causing a risk of interference with the detection/collection of the collecting terminal 12 by the heat of the plastic supporting frame 21. It is achieved that the size of the temperature-sensing collecting zone and the plastic supporting frame 21 is reduced to enable a more compact assembly of the collecting terminal 12 and the adhesive blocking part 22, while ensuring a high accuracy of the collecting terminal 12 in collecting the temperature of the cell.

Further, flexible circuit boards 11 provide a certain degree of flexibility. Assembly errors may occur when the flexible circuit board 11 and the plastic supporting frame 21 are assembled with each other. The collecting terminal 12 is prone to misalignment during assembly to the interior of the adhesive blocking part 22, so that the separation distance 3 is not achieved between the collecting terminal 12 and the adhesive blocking part 22, thereby causing the risk of overflow of adhesive due to inaccurate alignment of the collecting terminal 12.

Referring to Fig. 2 and Fig. 4 for details, an interior of the temperature sensing collecting-zone is also provided with a first positioning line 41; the first positioning line 41 is extended in a length direction of the flexible circuit board 11; the first positioning line 41 is used as a first reference standard for assembling the collecting terminal 12 to the temperature-sensing collecting zone; and the collecting terminal 12 is assembled in the interior of the temperature sensing collecting-zone and is aligned with the first positioning line 41, so that the separation distance 3 is formed between the collecting terminal 12 and the adhesive blocking part 22.

In the present embodiment, the first lateral frame 221 of the adhesive blocking part 22 is defined to extend in a length direction of the flexible circuit board 11, so the extension direction of the second lateral frame 222 is perpendicular to a length direction of the flexible circuit board 11. Then, the first positioning line 41 mentioned above is parallel to the first lateral frame 221, and a relative distance between the first positioning line 41 and the first lateral frame 221 is equal to the separation distance 3.

Specifically, as shown in Fig. 4, when a collecting terminal 12 is assembled to an interior of the adhesive blocking part 22, the first positioning line 41 is used as a first reference standard. A lateral edge of the collecting terminal 12 is aligned with the first positioning line 41 in a direction perpendicular to the temperature-sensing collecting zone, and a relative distance between the collecting terminal 12 and the first lateral frame 221 is equal to the separation distance 3.

As can be seen from the above, under the action of the first positioning line 41, the assembly accuracy of the collecting terminal 12 is improved, and the problem of inaccurate positioning of the collecting terminal 12 in the assembly process is eliminated, so as to avoid the problem of overflow of adhesive in the manufacturing process. Additionally, it also avoids the problem that the relative distance between the collecting terminal 12 and the first lateral frame 221 is reduced due to the offset and misalignment of the collecting terminal 12 resulting in the heat transfer from the adhesive blocking part 22 to the collecting terminal 12, and effectively ensures the accuracy of the detection and collection of the collecting terminal 12.

Supplementarily, the first positioning line 41 may be provided on the temperature-sensing collecting zone by applying, or may be provided on the temperature-sensing collecting zone by engraving, or may be a protruding structure in the form of a long strip and integrally molded with the plastic supporting frame 21.

Additionally, referring to Fig. 2 and Fig. 4 for details, the interior of the temperature sensing collecting-zone is also provided with a second positioning line 42; the second positioning line 42 is perpendicular to the first positioning line 41; the second positioning line 42 is used as a second reference standard for assembling the collecting terminal 12 to the temperature-sensing collecting zone; and the collecting terminal 12 is assembled in the interior of the temperature sensing collecting-zone and is aligned with the second positioning line 42, so that the separation distance 3 is formed between the collecting terminal 12 and the adhesive blocking part 22.

Specifically, the second positioning line 42 is parallel to the second lateral frame 222, and a relative distance between the second positioning line 42 and the second lateral frame 222 is equal to the separation distance 3. As shown in Fig. 4, when a collecting terminal 12 is assembled to an interior of the adhesive blocking part 22, the second positioning line 42 is used as a second reference standard. A lateral edge of the collecting terminal 12 is aligned with the second positioning line 42 in a direction perpendicular to the temperature-sensing collecting zone, and a relative distance between the collecting terminal 12 and the second lateral frame 222 is equal to the separation distance 3.

Therefore, under the action of the second positioning line 42, the assembly accuracy of the collecting terminal 12 is improved, and the problem of inaccurate positioning of the collecting terminal 12 in the assembly process is eliminated, so as to avoid the problem of overflow of adhesive in the manufacturing process. Likewise, it also avoids the problem that the relative distance between the collecting terminal 12 and the second lateral frame 222 is reduced due to the offset and misalignment of the collecting terminal 12 resulting in the heat transfer from the adhesive blocking part 22 to the collecting terminal 12.

Also, under the combined function of the first positioning line 41 and the second positioning line 42, the collecting terminal 12 may be precisely positioned in both the direction along the length of the flexible circuit board 11 and the direction perpendicular to the length of the flexible circuit board 11, so as to effectively ensure the assembly accuracy between the adhesive blocking part 22 and the collecting terminal 12, thereby effectively ensuring that the collecting terminal 12 carries out a stable and accurate collection.

Supplementarily, the second positioning line 42 may be provided on the temperature-sensing collecting zone by applying, or may be provided on the temperature-sensing collecting zone by engraving, or may be a protruding structure in the form of a long strip and integrally molded with the plastic supporting frame 21.

It is to be noted that the temperature-sensing collecting zone may be provided with only the first positioning line 41 when the collecting terminal 12 is not provided with a second lateral frame 222 in the direction of offsetting along the length of the flexible circuit board 11 of the plastic supporting frame 21.

Referring to Fig. 2 for details, the collecting terminal 12 includes a temperature sensing member 121 and a collection supporting part 122, the temperature sensing member 121 being fixedly connected to the collection supporting part 122, the collection supporting part 122 being fixedly connected to the flexible circuit board 11. The temperature sensing member 121 is preferably thermistor, admittedly, or may be other elements for detecting temperature, such as a temperature sensor. The collection supporting part 122 is made of a metal material with good thermal conductivity, such as aluminum and copper. The temperature sensing member 121 abuts the cell, so that the temperature sensing member 121 may directly detect and collect the temperature of the cell, thereby achieving the objective that the collecting terminal 12 collects the temperature signal of the cell accurately and efficiently.

Further, referring to Fig. 1 and Fig. 3 for details, a plurality of the temperature sensing collecting-zones are provided on the plastic supporting frame 3 in a length direction of the flexible circuit board 11; an edge of each temperature sensing collecting-zone is provided with the adhesive blocking part 22; a plurality of the collecting terminals are provided on the flexible circuit board 11; each collecting terminal 12 is provided corresponding to each adhesive blocking part 22; and each collecting terminal 12 is provided in an interior of each adhesive blocking part 22.

Specifically, a plurality of temperature-sensing collecting zones are evenly provided in a length direction of the flexible circuit board 11. Alternatively, as shown in Fig. 1 and Fig. 3, a plurality of temperature-sensing collecting zones are unevenly provided in a length direction of the flexible circuit board 11. The adhesive blocking parts 22 may all be in an L-shaped structure, or may all be in a square-shaped structure. Admittedly, as shown in Fig. 1 and Fig. 3, the adhesive blocking part 22 may be a mix of L-shaped and square-shaped structures. Preferably, square-shaped adhesive blocking part 22 is provided on two ends of the flexible circuit board 11 in the length direction, and square-shaped adhesive blocking part 22 is provided on the middle part of the flexible circuit board 11.

By providing a plurality of temperature-sensing collecting zones on the plastic supporting frame 21 and cooperating with a plurality of collecting terminals 12 of the flexible circuit board 11, a plurality of different cell surfaces of the battery pack are detected and collected, and the collection accuracy of the battery pack is further improved.

### Second Embodiment

On the basis of a CCS assembly disclosed in the First Embodiment, disclosed by the inventor is also a battery module, the battery module includes:
a battery pack; and
a CCS assembly mentioned above, the CCS assembly being provided on the battery pack, and a collecting terminal 12 of a flexible circuit board 11 being thermally conductively connected to the battery pack.

Specifically, the collecting terminal 12 of the flexible circuit board 11 abuts the corresponding cell of the battery pack, and is fixed and heat-conducted by adhesive, in which the adhesive is preferably a heat-conductive adhesive. In such a setup, the collecting terminal 12 may collect the temperature of the cell effectively and directly, under the combined function of the separation distance 3 and the adhesive blocking part 22, which effectively ensures the collection accuracy of the collecting terminal 12 on the temperature of the cell.

It is to be noted that a height of the collecting terminal 12 is greater than that of the adhesive blocking part 22. That is, the relative distance between the collecting terminal 12 for contacting and detecting the side of the cell and the temperature-sensing collecting zone is greater than a total height of the adhesive blocking part 22, so that the collecting terminal 12 may abut the cell of the battery pack. Additionally, the temperature sensing member 122 of the collecting terminal 12 is fixed to the plastic supporting frame 21 by foam adhesive.

Further, a plurality of collecting terminals 12 are provided on the flexible circuit board 11, and a plurality of collecting terminals 12 are thermally conductive connected to a plurality of cells of the battery pack, so that a plurality of collecting points are provided on different positions on the battery pack to acquire temperature signals of different cells, which further improves the temperature collecting accuracy of the battery pack.

### Third Embodiment

On the basis of a battery module disclosed in the Second Embodiment, disclosed by the inventor is also a battery pack, the battery pack including the battery module mentioned above.

In the present embodiment, the temperature signal acquired form the flexible circuit board 11 of the battery module is transferred to the battery management system (BMS) of the battery pack. Under the action of the adhesive blocking part 22 of the plastic supporting frame 21 and the separation distance 3 between the collecting terminal 12 and the adhesive blocking part 22, the battery management system may stably and accurately acquire the cell temperature of the battery pack so as to accurately monitor the operating condition of the cell, which ensures the operating stability and an optimal operating performance of the battery pack and a battery production adopted the battery pack.

## Claims

1. ACCS assembly, comprising:
a flexible circuit board (11), the flexible circuit board (11) being provided with a collecting terminal (12), the collecting terminal (12) being used for collecting a temperature signal of a cell; and
a plastic supporting frame (21), the plastic supporting frame (21) being provided with a temperature-sensing collecting zone, an edge of the temperature-sensing collecting zone being provided with an adhesive blocking part (22), wherein the flexible circuit board (11) is mounted and fixed on the plastic supporting frame (21), and the collecting terminal (12) is provided in an interior of the adhesive blocking part (22), a separation distance (3) being formed between the collecting terminal (12) and a side wall of the adhesive blocking part (22).

2. The CCS assembly according to claim 1, wherein the adhesive blocking part (22) comprises a first lateral frame (221) and a second lateral frame (222); the first lateral frame (221) and the second lateral frame (222) are vertically distributed in an L shape; and the first lateral frame (221) and the second lateral frame (222) are both fixedly connected to the plastic supporting frame (21).

3. The CCS assembly according to claim 2, wherein the adhesive blocking part (22) comprises two first lateral frame (221) and two second lateral frame (222); two first lateral frame (221) are provided oppositely and two second lateral frame (222) are provided oppositely; and two first lateral frame (221) and two second lateral frame (222) are enclosed in a square structure.

4. The CCS assembly according to claim 1, wherein an interior of the temperature-sensing collecting zone is also provided with a first positioning line (41); the first positioning line (41) is extended in a length direction of the flexible circuit board (11); and the collecting terminal (12) is assembled in the interior of the temperature-sensing collecting zone and is aligned with the first positioning line (41), so that the separation distance (3) is formed between the collecting terminal (12) and the adhesive blocking part (22).

5. The CCS assembly according to claim 4, wherein the interior of the temperature-sensing collecting zone is also provided with a second positioning line (42); the second positioning line (42) is perpendicular to the first positioning line (41); and the collecting terminal (12) is assembled in the interior of the temperature-sensing collecting zone and is aligned with the second positioning line (42), so that the separation distance (3) is formed between the collecting terminal (12) and the adhesive blocking part (22).

6. The CCS assembly according to any one of claims 1-5, wherein a plurality of the temperature-sensing collecting zones are provided on the plastic supporting frame (21) in a length direction of the flexible circuit board (11); an edge of each temperature-sensing collecting zone is provided with the adhesive blocking part (22); a plurality of the collecting terminals (12) are provided on the flexible circuit board (11); each collecting terminal (12) is provided corresponding to each adhesive blocking part (22); and each collecting terminal (12) is provided in an interior of each adhesive blocking part (22).

7. The CCS assembly according to any one of claims 1-5, wherein the collecting terminal (12) comprises a temperature sensing member (121) and a collection supporting part (122), the temperature sensing member (121) being fixedly connected to the collection supporting part (122), the collection supporting part (122) being fixedly connected to the flexible circuit board (11).

8. The CCS assembly according to claim 1, wherein thermally conductive adhesive is poured on the collecting terminal (12), used for thermally conductively connecting the collecting terminal (12) to the cell.

9. A battery module, comprising:
a battery pack; and
a CCS assembly as claimed in any one of claims 1-8, the CCS assembly being provided on the battery pack, a collecting terminal (12) of a flexible circuit board (11) being thermally conductively connected to the battery pack.

10. The battery module according to claim 9, wherein a plurality of the collecting terminals (12) are provided on the flexible circuit board (11), and a plurality of the collecting terminals (22) are thermally conductively connected to a plurality of cells of the battery pack.

11. The battery module according to claim 9, wherein a height of the collecting terminal (12) is greater than that of the adhesive blocking part (22), so that the collecting terminal (12) abuts the cell of the battery pack.

12. A battery pack, comprising a battery module as claimed in any one of claims 9-11.
